# EUROPEAN PATENT SPECIFICATION

(11) **EP 1 142 262 B1**
(45) Date of publication and mention of the grant of the patent: **03.12.2008**
(21) Application number: 99963532.9
(22) Date of filing: 14.12.1999
(51) Int. Cl.: H04L 29/06

(54) **SERVICE SYSTEM IN A NETWORK**
DIENSTESYSTEM IN EINEM NETZWERK
SYSTEME DE SERVICE DANS UN RESEAU

(30) Priority: 16.12.1998 EP 98123925
(43) Date of publication of application: 10.10.2001
(73) Proprietor: Nokia Siemens Networks GmbH & Co. KG, 81541 München (DE)
(72) Inventor: LAUTENBACHER, Markus, D-82487 Oberammergau (DE)
(86) International application number: PCT/EP1999/009928
(87) International publication number: WO 2000/036803

(56) References cited:
- EP-A- 0 365 200
- WO-A-97/38511
- WO-A-98/16051
- WO-A-98/37665
- WO-A-99/40712
- GB-A- 2 320 344

## Description

### 1. Introduction

In IP-based communication networks (for telecommunication and/or data), Network equipment vendors will add value to their products by providing distributed Network Services (e.g. QoS, security, reliability, roaming, remote access, ...) to enhance basic-IP connectivity.

Independent 3rd party companies will provide Network Applications (e.g. communication, collaborative working, e-commerce, on-line gaming, distance learning, ...) for clients/servers that transparently use the network infrastructure as a mere transport facility based on open standards and protocols.

The aforementioned facts require a flexible architecture for the provision and execution of user services in IP-based networks for telecommunication and data (converged networks).

### 2. State of the art

In existing solutions for user service provisioning e.g. in telecommunication networks like the GSTN (Global Switched Telephony Network), the intelligence for user service provision and execution are unified and centralized in a few network entities:
- In the Local Exchange LX approach (providing "switch-based services") the service processing is tightly coupled with normal call processing.
- In the Intelligent Network (IN) approach the call processing is separated. The combination of the Service Switching Function (SSF) and Service Control Function (SCF) work to process services by detection of traversal of points in a call and by manipulation of the call state.

In the GSTN, said user services are called supplementary services. In general, these supplementary services automate procedures that people carry out when using "basic" telephony. In other words, supplementary services are features that make basic telephony calls more convenient

GB 2320344 describes the provision of on-demand access to services for network computers. In particular, this document describes enabling applications that are executed on a network client such as a network computer to access services, such as printing and local storage.

### 3. The Invention

Next generation IP-based networks will have two important characteristics:
- mobility of users (with or without their terminals)
- a wealth of intelligent terminals (PC, PDA, laptop, mobile phone with Java Virtual Machine (JVM), ...)
These characteristics drive requirements for the benefit of the user and network:

### User Requirements:

- Roaming of nomadic users combined with transparent comigration of their Virtual Home Environment (VHE). The VHE is a user's personal set of subscribed applications, his personal options of how these applications are configured and bundled into a user services package, and his personal choice how he wants to pay for the use of these user services.
- Intelligent communication terminals like a PC, PDA, lap/palmtop, mobile phone with Java Virtual Machine (JVM) etc.
- A user may not be limited to a single type of intelligent terminal but instead will want to use what is most appropriate or what is available at a particular location.
- Despite changing terminals at will, the user always wants to have the same services available regardless of the particular end device used.

### Network Requirements:

Due to the flexible nature of IP-based networks, the number of possible applications and user services running on intelligent terminals is enormous. Programmers are constantly implementing new ideas based on inexpensive, off-the-shelf platforms for intelligent terminals (e.g. PCs).

An architecture for the provision of user services must be able to cope with ever changing applications and user services for even more rapidly evolving terminal hardware. As the network edges are changing so fast, it will become impossible to provide and execute user services in the core of the network. Core equipment is subject to more stringent requirements than consumer-grade, low-cost edge equipment (terminals) and hence more expensive. Creation of applications and corresponding user services (supplementary services in the case of Internet Telephony) on core equipment would technologically and economically not be able to keep up with the rapid creation of new applications and user services on inexpensive edge equipment.

The object of the present invention is to solve said problems by a service system, terminal, method, communication network and server according to the appended claims 1, 7, 11, 13 and 14. Preferred embodiments are defined in the dependent claims.

In the following, the invention is described by the aid of a few examples of its embodiments by referring to the attached drawing comprising seven figures.
Figure 1: Elements of an architecture for the provision of use services in next generation networks.
Figure 2: Architecture for the provision of user services in "idle state": ready to enable a user with his specific service profile when he connects with his intelligent terminal to a network access point.
Figure 3: Step-by-step service delivery: ( user authentication ( "user ID-to-service profile" mapping ( "service profile-to-applications bundle" mapping ( delivery of user specific applications bundle.
Figure 4: Service delivery completed: the user is ready to use his personal profile of user services.
Figure 5: Detailed view of the Application Execution Environment (AXE).

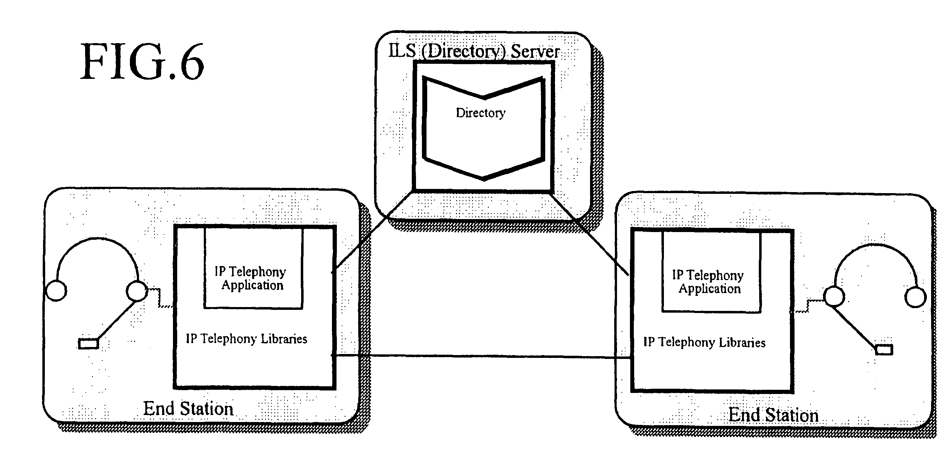

Figure 6: Minimal architecture for Internet Telephony.
Figure 7: Architecture for supplementary services in Internet Telephony

The principle idea of the invention is the function split in realizing services:
providing of user services (e.g. enabling, profiling, distribution, administering and billing of user services) remains in the core of the network, while the execution of user services is delegated to intelligent terminals at the network edges.

Since by now terminals have become powerful processing units anyway, it is economically and technically reasonable to delegate the execution of user services to intelligent terminals at the network edges. However providing of user services (e.g. enabling, profiling, distribution, administering and billing of user services) remains in the core of the network.

Technically this is achieved by a corresponding client/server architecture with a least one central application repository server keeping copies of application programs that can be downloaded on-demand into the user's terminals.

This architecture for the provision of user services in next generation IP-based networks for telecommunication and/or data meets all the aforementioned user and network requirements.

The invention optimally makes use of the two sources of intelligence that will be present in such networks:
- distributed intelligence in network elements (such as routers and switches) adding value to basic IP-connectivity
- intelligence in end systems (clients, servers) allowing for a wealth of advanced applications
This is a new notion of "network intelligence" different from the interpretation in classical IN for the GSTN where intelligence solely rests in central entities. There the terminals are just dumb telephony sets without any processing power.

With terminals becoming powerful processing units due to technical evolution, an embodiment of the invention includes a corresponding application execution environment (application execution component) that works across a wide range of intelligent terminals and enables the technical feasibility of delegating service execution to a spectrum of different intelligent terminals.

### Terminology:

User services are services to the end user resulting from the interworking of network-aware applications which operate above IP-Model Layer 3 (typically even above IP-Model Layer 5) in intelligent terminals at the edges of the network. Examples: email, WWW, Buddy Lists, Internet Telephony, ...

Network services add value to the basic service of "IP-transport". These services are provided at IP-Model Layers 2 & 3 by network elements which operate inside the network. Examples: QoS, security, VPN, ...

The invention is concerned with an architecture for the provision of user services to IP-based intelligent terminals, not with the provision of network services.

For the purpose of the invention it is sufficient to treat the IP-based network as an entity providing IP-connectivity only. The network is considered to be a pure transport network offering no specific network services.

### 3.1 General architecture

### 3.1.1 Architectural elements

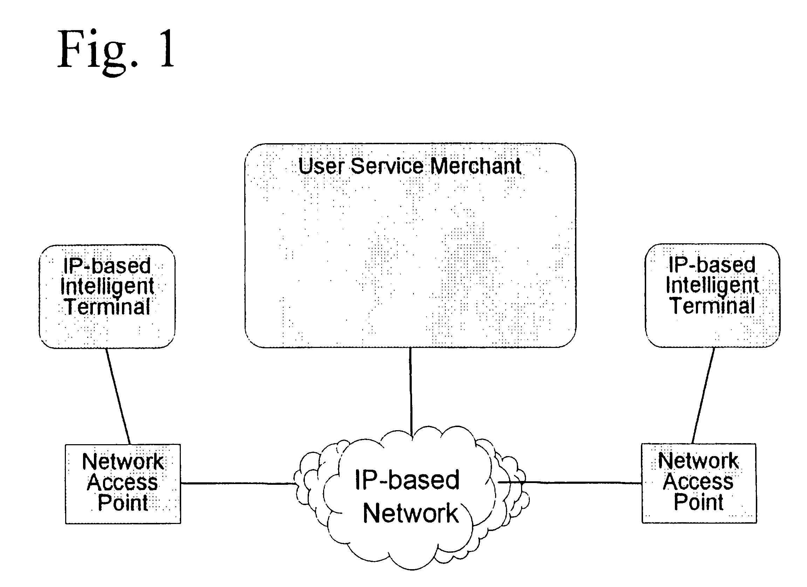

The general architecture involves only a small number of network entities as illustrated in Fig. 1:

### IP-based Intelligent Terminals:

This is a network entity with its own IP address, memory, and some sort of CPU. For the near future, this are the numerous workstations, PCs, lap- & palmtops, IP-(video)phone sets, TV set-top boxes, mobile communication devices that run some sort of operating system and become - following Moore's Law - equipped with ever more powerful CPUs every 18 months. Each of these terminals understands some variant of Java. Today, the Java Virtual Machine (JVM) is already a standard part of most operating systems or gets molded into dedicated silicon chips for small devices like mobile communication devices.
There is and will be a wealth of terminals available to the user. Each of them far more "intelligent" than the standard phone handset of today. The proposed architecture will therefore make use of this "free and idle intelligence" by delegating execution of user services to it.

### Network Access Points:

Depending on the particular intelligent terminal considered, this is a LAN connector, a dial-up POP of an ISP, a lap/palmtop docking unit, a base station for mobile communication, etc. In the proposed architecture the sole purpose of the network access point is to provide IP-network connectivity.
Given the possibility of users roaming from access point to access point, getting dynamically assigned IP-address while at the same time switching between PC, laptop, mobile communication device, ... , the access does not handle advanced tasks such as authentication or any other user specific things.

### User Service Merchant:

If the execution of user services is delegated to the intelligent terminals, and the network access point provides just pure IP-connectivity, then the intelligence beyond mere execution of user services must be kept elsewhere. This is the User Service Merchant. The User Service Merchant acts as a central source for user specific information like user ID, authentication data, profile of subscribed user services, billing information, etc. It also keeps "master copies" of the application executables in a dedicated repository (see next section for a detailed explanation). The User Service Merchant provides all the logic necessary to provision services to the user but does not actually perform the services.

In the existing classical IN for the GSTN, the intelligence for service provision and execution are unified and centralized in a few network entities. This is opposite to the solution proposed here, where the intelligence is split and decentralized: provision of user services is handled centrally by the User Service Merchant, the actual execution of user services is delegated to the distributed intelligent terminals.

### 3.1.2 Distributed Model for Provision and Execution of User Services

### 3.1.2.1 "Idle" State

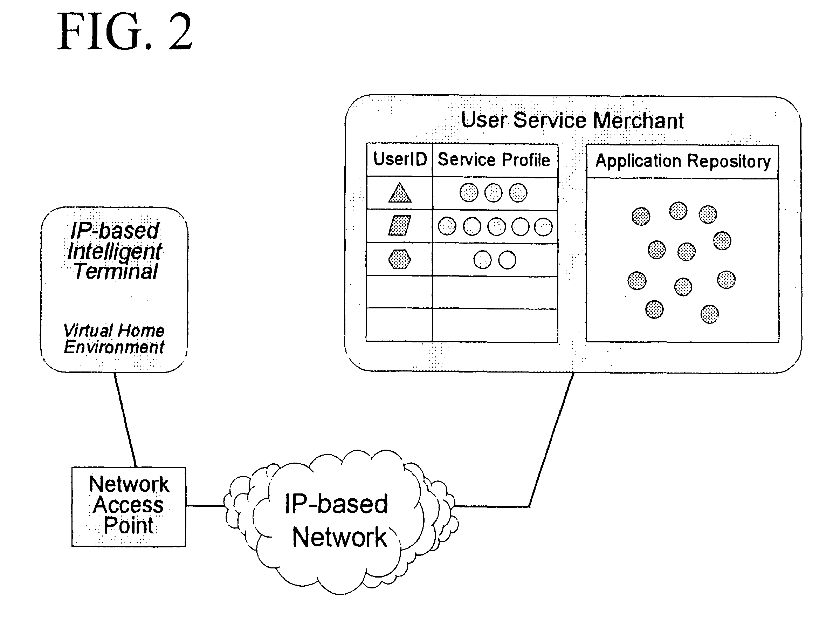

Fig. 2 shows the architecture in "idle state". The User Service Merchant is connected to the network, the user's intelligent terminal (PC, laptop, mobile communication device, ...) may or may not be connected to the network via a network access point. At this point the User Service Merchant considers the terminal as "off-line" (in Fig. 2 represented in italics) in either case.

The User Service Merchant keeps a list of user IDs (UID). An UID uniquely identifies a subscriber and indirectly associates him with a certain bundle of pre-selected applications. The information about the exact selection of applications is kept as an UID-associated Service Profile for each individual subscriber on the User Service Merchant.

The User Service Merchant also maintains an Application Repository which basically is a collection of application programs stored in a suitable database system. Each program either implements a self-contained user service, or some value-adding supplementary feature for such a service (example: the self-contained service could be "text-only Web browsing" for mobile communication appliances, the supplementary feature could be "optional graphics support for Web browsing" with the same appliance). The programs are implemented such that an instance of them can be downloaded on demand from the repository into the user's intelligent terminal for execution. This may be achieved by technologies such as Java.

A user can (un)subscribe to any of the available application programs in the repository by correspondingly changing the configuration of his UID-associated Service Profile. This update of the Service Profile is propagated to the User Service Merchant for permanent storage when the user terminates his session or when he takes his intelligent terminal off-line. The Service Profile is not stored on the user's intelligent terminal to allow for easy roaming or switching between different intelligent terminals. With the Service Profile kept centrally on the User Service Merchant the user always gets the same Service Profile regardless whether he accesses the network e.g. from his office PC, from a public information kiosk, from a mobile communication device, or from home. Changes to the Service Profile made from one location/terminal will be available automatically at any other location/terminal. This concept of a Service Profile transparently migrating with the user across different locations and end systems is referred to as Virtual Home Environment (VHE).

### 3.1.2.2 Service Delivery

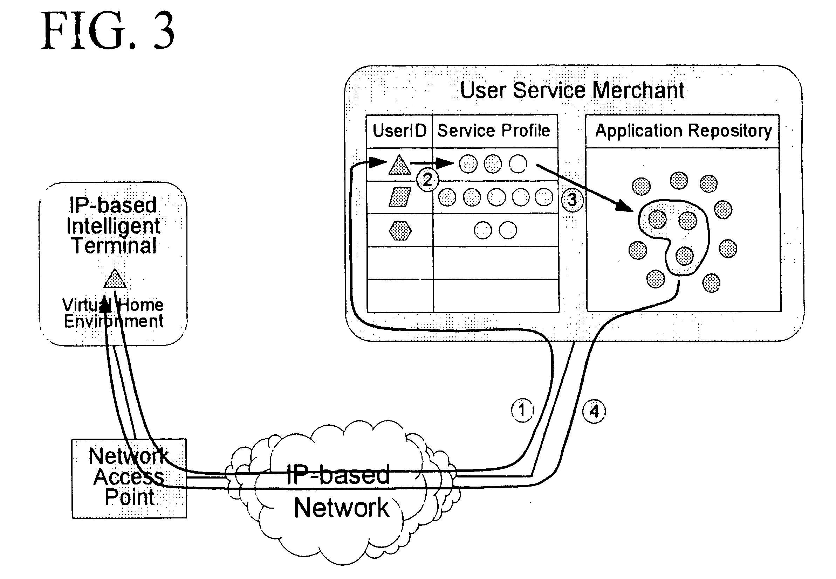

Service delivery with this type of architecture is shown in Fig. 3. The steps involved are:
(1) User Authentication
   Before a user can use any of the services he has to authenticate himself by providing his UID (and related password/PIN) to the Service Merchant. In the case of a permanently connected PC this can be done by clicking on a corresponding button. In the case of a laptop or a mobile communication device, this can be done automatically when it gets connected to the Network Access Point.
(2) "UID-to-Service Profile" Mapping
   After the UID (dark gray triangle) has been verified, it is mapped to the corresponding Service Profile of the user. The Service Profile (light gray blobs) represents the user's personalized applications bundle compiled from the total set of available applications (dark gray blobs) in the Application Repository. Via the Service Profile the user can create his very personal VHE. The profile is not static but can be customized and administered by the user directly from his intelligent terminal.
(3) "Service Profile-to-Applications Bundle" Mapping
   Based on the information in the user's Service Profile the User Service Merchant identifies a subset of the applications available in the Application Repository. The identified subset (circled dark gray blobs) is the personalized bundle of user services.
(4) Delivery of User Specific Applications BundleThe final step is to download the selected bundle of applications over the network into the user's intelligent terminal. The Java software technology was designed with exactly this download capability of programs in mind. Related issues such as platform independence, efficiency and security when transmitting code over a network are an integral part of the Java design. Together with its increasing availability in intelligent terminals, this makes Java the prime candidate to support the type of architecture for the delivery of user services discussed in this document.

### 3.1.2.3 "Ready" State

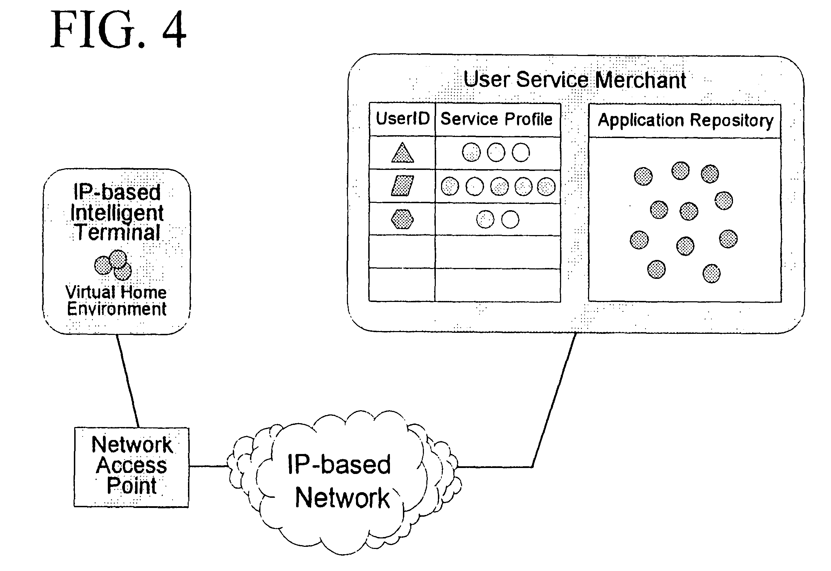

Fig. 4 shows the architecture in the "ready state", the final stage of the service provisioning process. The programs enabling the subscribed user services have been downloaded into his intelligent terminal and await their invocation and execution there.

### 3.1.3 Advantages

As end systems become equipped with ever more powerful processors, it is just reasonable to exploit this power by having the services execute on the end systems rather than some central network entity. Restraining themselves to service delivery issues rather than execution central network entities face less stringent scalability problems.

Furthermore, with this approach central network entities like the User Service Merchant are out of the loop of rapid technology changes in intelligent terminals like PCs, laptops, mobile communication devices, etc. If service specific details regarding the intelligent terminals change, only the affected modules of the programs in the Application Repository have to be adapted. The User Service Merchant as a whole with its user administration, authentication, application repository & delivery functions is not affected at all. This modular approach to the provision of user services is nicely supported by the dynamic loading of required classes available in Java. Not even the whole program has to be replaced but just the affected class file.

### 3.1.4 Application Execution Environment (AXE)

With execution of user services delegated to the intelligent terminals in the form of downloadable application programs, it becomes important to devise a corresponding Application execution environment that works across a wide range of technologically different intelligent terminals. The Application execution environment is therfore implemented as a virtual machine, for example as a java virtual machine. The virtual machine has to be ported to each supported terminal only once. To the applications the virtual machine looks the same on all supported terminals.

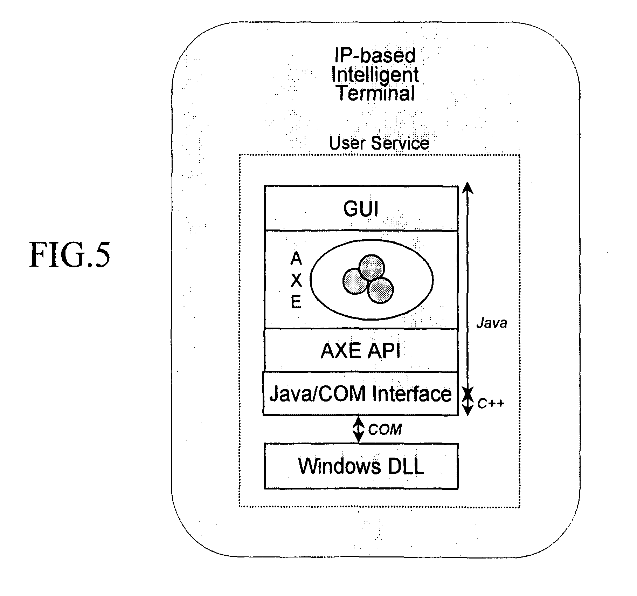

Fig. 5 shows a correspondingly detailed view of an intelligent terminal for the case of a PC running the Windows operating system by Microsoft.

The downloaded application programs that implement a particular user service are Java applets (dark gray blobs).

They are executed in the Application Execution Environment (AXE) on the intelligent terminal. Communication to and from the user is done via a graphical user interface (GUI) shared by all user services. The downloaded programs are confined within the AXE (so-called 'sandbox' approach) and do not communicate to lower software layers other than through a specific AXE API. The platform dependent connection to the Windows DLLs is achieved by a Java/COM interface taking AXE API commands as input. This interface has to be written only once (e.g. in C++) for each supported intelligent terminal. The interface forms the specific link between the platform independent user services implemented in Java and the actual operating system and hardware of the terminal.

### 3.2 ARCHITECTURE FOR SUPPLEMENTARY SERVICES IN INTERNET TELEPHONY

This evolves the general architecture of section 3.1 further in the case of supplementary services for Internet Telephony.

### 3.2.1 Prerequisites

### 3.2.1.1 Status Quo

Today, Internet Telephony is still lacking the elaborate set of supplementary services offered by the Intelligent Network (IN) approach in the Global Switched Telephone Network (GSTN). Internet Telephony is mainly used to provide an analogy for telephony over the GSTN.

### 3.2.1.2 Minimal Architecture for Internet Telephony

Fig. 5 shows a minimal configuration by which Internet Telephony (and, in particular, Microsoft (MS) NetMeeting) calls are arranged.
In this arrangement, there are three PCs needed: the Internet Locator Service (ILS) Server and the originating and terminating end stations. The end stations are involved actively in the communication session, transcoding audio streams (and, optionally, video streams or data) into a form that can be carried over the Internet.
The ILS (Internet Locator Service) Server acts as a directory server in the configuration. This node stores information on the users who are "logged in". Via the ILS users are associated with an Internet host, and that Internet host is running an Internet Telephony application and so is ready to respond to incoming call requests. When a user asks for an Internet Telephony call to be originated, an address query is sent to the directory server with the "alias" (usually the email identifier) of their intended correspondent. The ILS then responds with the user's currently associated IP-address.

### 3.2.1.3 Distinctive Features of Supplementary Services in Internet Telephony

With Internet Telephony a number of distinctive features for supplementary services become possible that are not available in the case of GSTN:

### Supplementary services for Internet Telephony are applications

The important point to note here is that user services, in this particular case supplementary services for Internet Telephony, are associated with applications running on intelligent terminals, not some sort of central network entity.

### Simple service usage

Use of the Internet allows a great deal of complexity in the provision of supplementary services to be avoided. Many of the services that require user interaction in the GSTN require temporary connections to be made to specialized resources (such as announcement units and DTMF tone decoders), and for any captured information to be sent onwards to service processors using separate data links. All of this is avoided because, on the Internet, one can assume that a user is associated with an end station that allows involved text and graphics to be displayed, and that the end station is capable of transferring complex messages directly, rather than being restricted to a simple keypad.

### Delegation of service processing to powerful end systems

There is another implication of the use of the Internet when providing supplementary services. Internet hosts are computers, and so will almost certainly have powerful processors. This opens the possibility of carrying out much of the processing on the end stations rather than relying on the network nodes (such as the LX or the IN) as is required in the GSTN due to the lack of local intelligence in the POTS telephones.

### Advanced supplementary services by combination with standard IT applications

Combination of basic Internet Telephony with other Internet applications such as email enables yet another completely different set of truly advanced supplementary services.

### 3.2.2 Architecture

The architecture proposed here implements and extends the more general architecture of section 3.1 for the case of supplementary services for Internet Telephony.

The architecture is concerned with an architecture to support the provision of supplementary services for Internet Telephony. It is not concerned with providing a solution for basic Internet Telephony calls. This functionality will be taken from some off-the-shelf Internet Telephony application package like Microsoft (MS) NetMeeting.

The proposed architecture contains an infrastructure for distributing service logic (in the form of Java applets) to the end stations, and for allowing the service logic and it's management infrastructure to operate in a distributed fashion (both in the end stations and in separate servers). The distributed service logic supports and interworks with the aforementioned Internet Telephony application package.

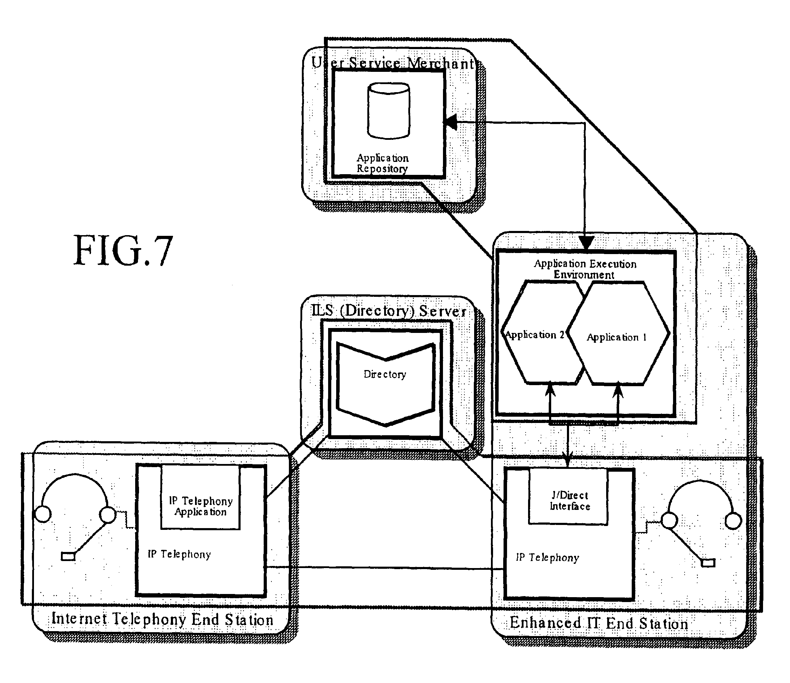

Fig. 7 shows the general arrangement of systems providing Internet Telephony, with one of the end stations (shown at the right) also having the enhancements to support supplementary services for Internet Telephony. The architecture contains the following entities:

### User End Stations

The two end stations run off-the-shelf MS NetMeeting Internet Telephony application packages, where at least one application is enhanced with the J/Direct Interface and the Application Execution Environment (AXE).

### ILS Server

The server offers directory services for translation of a symbolic user alias (e.g. email address) to the user's current IP address. The ILS is used to allow for easy to remember Telephony "numbers" and hence supports convenient call setup by the user.

### User Service Merchant

The User Service Merchant acts as a repository for the supplementary services for Internet Telephony. The services are stored as pre-compiled programs (in the form of Java applets), each implementing a specific service logic. On demand by the user, these service logic units are downloaded into the user's end stations for execution there. The User Service Merchant also keeps track of which user is entitled to use which supplementary service.

When a user requests a particular Internet Telephony supplementary service, the Java applet with the corresponding service logic is downloaded from the Service Merchant into the AXE which sits on top of the user's Internet Telephony application package. The applet runs in the AXE and drives the telephony application package according to the applet's service logic through the J/Direct interface. The J/Direct interface allows for the service logic to access the Internet Telephony libraries of the underlying application package.

### 3.2.3 Key features and Benefits

- The proposed solution is not concerned with the fundamental processes involved in making a call (that functionality is to be provided by the underlying Internet Telephony package used). Part of the solution is however the provision of a standard interface that enables supplementary services to interact with all telephony packages in the same manner, without the need for any package-specific code in the services and whilst keeping the service/package interaction as simple as possible.
- The ability to download a user-specific set of small application programs from a central server into the user's end system.
- The ability to limit the supplementary services a user has access to and to charge the user for the services used.
- The ability to execute the downloaded programs that implement a set of supplementary services on the user's machine, in a secure environment and regardless of the machine platform.
- An overall control process that allows multiple, potentially conflicting, supplementary services to be executing at the same time without problem. The user is able to assign and change the relative priority of services within the service set and thus modify how potential conflicts are to be resolved.
- The ability for individual supplementary services in the downloaded service set to be configured by the user. This configuration includes setting service-specific parameters, setting the relative priority of services within the set of supplementary services and the ability to enable and disable individual services on a temporary basis.

### 3.2.4 Sample Supplementary Services for Internet Telephony

Given the proposed architecture, a wealth of supplementary services for Internet Telephony can be provided: The set of sample Internet Telephony supplementary services listed below are aimed at combining email and Internet Telephony. The services can be grouped into "originating" and "terminating" services depending on whether the caller or callee uses them.

### Email Alternative on Called Party Busy (originating)

This originating service is triggered when the callee is already engaged in a call. Although the user may have rejected the offered call explicitly, the result (inability to communicate) is the same, and this service suffices in both cases. The caller is asked whether or not he wants to send an email instead. If the caller answers in the affirmative, then the rest of the service proceeds. The conference and call objects created by NetMeeting hold information on the called user alias, and this is used to make a template for an email to be filled in by the caller. This template is displayed on the user interface, and, on entry of the email content, is submitted for transmission. By implication, the service logic must include a small email client to send the email to an SMTP server.

### Timed Retry on Called Party Busy (originating)

As in the previous case, this supplementary service is triggered when a call rejection has been received from the remote callee. In this case, however, it will display a user interface dialogue asking the calling subscriber if they would like the system to retry the callee's address at regular intervals. If the answer returned is "yes", then the service proceeds. A timer is started, and on its expiry, the call is re-initiated. After that, the service monitors the call state, and, if the call is successful, the user is notified. If it again fails, the timer is reset, and the sequence repeats. A choice on the user interface to be presented to allow for canceling of the sequence once it has could be an additional feature.

### Call Filtering (terminating)

This terminating supplementary service is used to process calls delivered to the end station in terms of the caller's identity. In this case, it will be used to "auto-reject" call offers from people not on a list of names generated as a pre-service procedure. The list can contain explicit caller IDs or include mechanisms to reject calls from people who have arranged their Internet Telephony client not to pass on their identity (by the expedient of not registering with an ILS server prior to making the call, in the case of NetMeeting).

### Email Notification of Missed Calls (terminating)

This terminating supplementary service allows a subscriber (callee) to be informed by email of the identities of the people who have called him whilst he was unable (or unwilling) to answer his Internet Telephony program. The supplementary service will extract the name of the caller from the call data that NetMeeting provides (as well as making a note of the current time), and then construct an email describing this information. Once this is ready, it will connect to the callee's SMTP server, will send the text it has created, and then finally terminate the connection. Enhancements of this service could be used to send other kinds of notification (such as, for example, contacting a Web-based gateway to the GSM Short Message Service (SMS) and sending an SMS message with the caller's identity).

Abbreviations:
IP: Internet Protocol

## Claims

1. Service system in a network comprising:
- at least one server storing a set of application programs, said set of application programs implementing user services that may be subscribed by a user, said at least one server storing a service profile for each user, said service profile defining a subset of the set of application programs for implementing the specific services subscribed by a user on a per user basis,
- at least one terminal with access to the network, requesting on demand of a terminal user downloading of the subset of application programs, said subset of application programs corresponding to the services the user has subscribed to, and where
- the subset of application programs implementing the services subscribed by the user are executed on said at least one terminal after download on demand by the user.

2. Service system according to claim 1, **characterized in that** specific services subscribed by a user on a per user basis are stored as a terminal independent profile.

3. Service system as defined in claim 1, **characterized in that** said services are supplementary services to basic user services.

4. Service system as defined in claim 1, **characterized in that** said services are supplementary services to the service "internet telephony".

5. Service system as defined in any one of claims 1 - 4, **characterized in that** the specific services can be configured user controlled via said terminal.

6. Service system as defined in any one of claims 1 - 5, **characterized in that** a Java System at said server and said terminals supports the downloading of said application programs.

7. Terminal of a network, arranged
- for interacting with at least one server in the network, where the at least one server stores a set of application programs, said application programs implementing user services that may be subscribed by a user, said at least one server storing a service profile for each user, said service profile defining a subset of the set of application programs for implementing the specific services subscribed by a user on a per user basis, and where the terminal is further arranged
- for requesting on demand of a terminal user downloading of the subset of application programs, said subset of application programs corresponding to the services the user has subscribed to, and
- executing the subset of application programs that implement the services subscribed by the user on the terminal after download on demand by the user.

8. Terminal according to claim 7, **characterized in that** the terminal comprises
- a client component requesting on demand of a user downloading of application software implementing user services and may be subscribed by the user,
- an application execution component executing said application software on demand directly on the terminal, said application execution component being ported to the terminal only once.

9. Terminal as defined in claim 8, **characterized in that** said application execution component is implemented as a virtual machine.

10. Terminal as defined in claim 8 or 9, **characterized in that** configuring specific services subscribed by a user can be made via said client component.

11. A method for realising services in a network, wherein
- providing of user services is done by a server in the core of the network, said server stores a set of application programs which implement user services that may be subscribed by a user,
- storing on the server a service profile for each user, said service profile defining a subset of the set of application programs that implement specific services subscribed by a user on a per user basis,
- executing of said subset of application programs corresponding to the user services subscribed by the user is done by terminals at the network edges after said subset of application programs implementing the user services subscribed by the user are downloaded into the terminal.

12. A method as defined in claim 11, **characterized in that** the method is used for the realization of supplementary services for internet telephony.

13. Communication network, comprising
- a core network providing user services, where the core network comprises at least one server storing a set of application programs, said set of application programs implementing user services that may be subscribed by a user, said at least one server storing a service profile for each user, said service profile defining a subset of the set of application programs implementing the specific services subscribed by a user on a per user basis,
- terminals at the network edges directly executing said subset of application programs corresponding to the user services after said subset of application programs implementing the user services are downloaded into said terminals.

14. A server in a network comprising:
a data base system storing a set of application programs implementing services that may be subscribed by a user and said data base system storing a service profile for each user, said service profile defining a subset of the set of application programs implementing the specific services subscribed by a user on a per user basis,
a transfer component transferring on demand of a user at a terminal the subset of application programs corresponding to the services subscribed by the user to that terminal for execution in the terminal.

15. Server as defined in claim 14, **characterized in that** said services are supplementary services to basic user services.

16. Server as defined in claim 14, **characterized in that** said services are supplementary services to internet telephony.

## Patentansprüche

1. Dienstsystem in einem Netz umfassend:
- mindestens eine Menge von Anwendungsprogrammen speichernden Server, wobei diese Menge von Anwendungsprogrammen Benutzerdienste implementiert, die von einem Benutzer abonniert werden können, wobei der mindestens eine Server ein Dienstprofil für jeden Benutzer speichert, wobei dieses Dienstprofil eine Teilmenge der Menge von Anwendungsprogrammen zum Implementieren der von einem Benutzer abonnierten bestimmten Dienste auf benutzerorientierter Basis definiert,
- mindestens ein Endgerät mit Zugang zum Netz, das auf Bedarf eines Endgerätebenutzers das Herunterladen der Teilmenge von Anwendungsprogrammen anfordert, wobei diese Teilmenge von Anwendungsprogrammen dem Dienst entspricht, den der Benutzer abonniert hat, und wobei
- die Teilmenge von die vom Benutzer abonnierten Dienste implementierenden Anwendungsprogrammen nach Herunterladung auf Bedarf vom Benutzer auf dem mindestens einen Endgerät ausgeführt werden.

2. Dienstsystem nach Anspruch 1, **dadurch gekennzeichnet, daß** von einem Benutzer auf benutzerorientierter Basis abonnierte bestimmte Dienste als endgeräteunabhängiges Profil gespeichert werden.

3. Dienstsystem nach Anspruch 1, **dadurch gekennzeichnet, daß** diese Dienste Zusatzdienste zu Basis-Benutzerdiensten sind.

4. Dienstsystem nach Anspruch 1, **dadurch gekennzeichnet, daß** diese Dienste Zusatzdienste zu dem Dienst "Internet-Telefonie" sind.

5. Dienstsystem nach einem der Ansprüche 1 bis 4, **dadurch gekennzeichnet, daß** die bestimmten Dienste unter Benutzersteuerung über das Endgerät konfiguriert werden können.

6. Dienstsystem nach einem der Ansprüche 1 bis 5, **dadurch gekennzeichnet, daß** ein Java-System auf dem Server und den Endgeräten das Herunterladen der Anwendungsprogramme unterstützt.

7. Endgerät eines Netzes, ausgeführt
- zum Wechselwirken mit mindestens einem Server im Netz, wobei der mindestens eine Server eine Menge von Anwendungsprogrammen speichert, wobei diese Anwendungsprogramme Benutzerdienste implementieren, die von einem Benutzer abonniert sein können, wobei der mindestens eine Server ein Dienstprofil für jeden Benutzer speichert, wobei dieses Dienstprofil eine Teilmenge der Menge von Anwendungsprogrammen zum Implementieren der von einem Benutzer auf benutzerorientierter Basis abonnierten bestimmten Dienste definiert, und
wobei das Endgerät weiterhin ausgeführt ist
- zum Anfordern auf Bedarf eines Endgerätebenutzers des Herunterladens der Teilmenge von Anwendungsprogrammen, wobei diese Teilmenge von Anwendungsprogrammen den vom Benutzer abonnierten Diensten entspricht, und
- Ausführen der Teilmenge von Anwendungsprogrammen, die die vom Benutzer abonnierten Dienste implementieren (dem Endgerät nach Herunterladen auf Bedarf durch den Benutzer).

8. Endgerät nach Anspruch 7, **dadurch gekennzeichnet, daß** das Endgerät umfaßt
- Anfordern durch eine Client-Komponente auf Bedarf eines Benutzers des Herunterladens von Benutzerdienste implementierende Anwendungssoftware, die vom Benutzer abonniert sein kann,
- Ausführen durch eine Anwendungsausführungskomponente der Anwendungssoftware auf Bedarf direkt auf dem Endgerät, wobei diese Anwendungsausführungskomponente nur einmal zum Endgerät portiert wird.

9. Endgerät nach Anspruch 8, **dadurch gekennzeichnet, daß** die Anwendungsausführungskomponente als virtuelle Maschine implementiert ist.

10. Endgerät nach Anspruch 8 oder 9, **dadurch gekennzeichnet, daß** Konfigurieren von durch einen Benutzer abonnierten bestimmten Diensten über die Client-Komponente durchgeführt werden kann.

11. Verfahren zum Realisieren von Diensten in einem Netz, wobei
- Bereitstellung von Benutzerdiensten durch einen Server im Kern des Netzes durchgeführt wird, wobei dieser Server eine Menge von Anwendungsprogrammen speichert, die Benutzerdienste implementieren, die von einem Benutzer abonniert sein können,
- Speichern auf dem Server eines Dienstprofils für jeden Benutzer, wobei dieses Dienstprofil eine Teilmenge der Menge von Anwendungsprogrammen definiert, die von einem Benutzer auf benutzerorientierter Basis abonnierte bestimmte Dienste implementieren,
- Ausführen der Teilmenge von Anwendungsprogrammen entsprechend den durch den Benutzer abonnierten Benutzerdiensten wird durch Endgeräte an den Netzrändern durchgeführt, nachdem Teilmengen von die vom Benutzer abonnierten Benutzerdienste implementierende Anwendungsprogrammen in das Endgerät heruntergeladen sind.

12. Verfahren nach Anspruch 11, **dadurch gekennzeichnet, daß** das Verfahren zur Realisierung von Zusatzdiensten für Internet-Telefonie benutzt wird.

13. Kommunikationsnetz umfassend
- ein Benutzerdienste bereitstellendes Kernnetz, wobei das Kernnetz mindestens einen eine Menge von Anwendungsprogrammen speichernden Server umfaßt, wobei die Menge von Anwendungsprogrammen Benutzerdienste implementiert, die von einem Benutzer abonniert sein können, wobei mindestens ein Server ein Dienstprofil für jeden Benutzer speichert,
wobei dieses Dienstprofil eine Teilmenge der Menge von die durch einen Benutzer auf benutzerorientierter Basis abonnierten Anwendungsprogramme definiert,
- die Teilmenge von Anwendungsprogrammen entsprechend den Benutzerdiensten direkt ausführende Endgeräte an den Netzrändern, nachdem diese die Benutzerdienste implementierende Teilmenge von Anwendungsprogrammen in die Endgeräte heruntergeladen sind.

14. Server in einem Netz umfassend:
ein eine Menge von Anwendungsprogrammen speicherndes Datenbanksystem, die Dienste implementieren, die von einem Benutzer abonniert sein können, und wobei das Datenbanksystem ein Dienstprofil für jeden Benutzer speichert, wobei dieses Dienstprofil eine Teilmenge der Menge von die vom Benutzer auf benutzerorientierter Basis abonnierten spezifischen Dienste implementierenden Anwendungsprogrammen definiert,
wobei eine Übertragungskomponente auf Bedarf eines Benutzers an einem Endgerät die Teilmenge von den vom Benutzer abonnierten Diensten entsprechenden Anwendungsprogrammen an dieses Endgerät zur Ausführung auf dem Endgerät überträgt.

15. Server nach Anspruch 14, **dadurch gekennzeichnet, daß** diese Dienste Zusatzdienste zu Basis-Benutzerdiensten sind.

16. Server nach Anspruch 14, **dadurch gekennzeichnet, daß** die Dienste Zusatzdienste zu Internet-Telefonie sind.

## Revendications

1. Système de services dans un réseau, comprenant :
- au moins un serveur stockant un ensemble de programmes d'applications, ledit ensemble de programmes d'applications mettant en ouvre des services utilisateur qui peuvent être souscrits par un utilisateur, ledit au moins un serveur stockant un profil de services pour chaque utilisateur, ledit profil de services définissant un sous-ensemble de l'ensemble de programmes d'applications servant à mettre en ouvre les services spécifiques souscrits par un utilisateur, suivant utilisateur,
- au moins un terminal ayant accès au réseau, demandant, sur demande d'un utilisateur du terminal, le téléchargement du sous-ensemble de programmes d'applications, ledit sous-ensemble de programmes d'applications correspondant aux services auxquels l'utilisateur a souscrit et où
- le sous-ensemble de programmes d'applications qui mettent en ouvre les services souscrits par l'utilisateur est exécuté sur ledit au moins un terminal après le téléchargement sur demande par l'utilisateur.

2. Système de services selon la revendication 1, **caractérisé en ce que** les services spécifiques souscrits par un utilisateur , suivant utilisateur, sont stockés en tant que profil indépendant d'un terminal.

3. Système de services selon la revendication 1, **caractérisé en ce que** lesdits services sont des services supplémentaires de services utilisateur basiques.

4. Système de services selon la revendication 1, **caractérisé en ce que** lesdits services sont des services supplémentaires du service "téléphonie Internet".

5. Système de services selon l'une des revendications 1 - 4, **caractérisé en ce que** les services spécifiques peuvent être configurés, contrôlés par l'utilisateur, par le biais dudit terminal.

6. Système de services selon l'une des revendications 1 - 5, **caractérisé en ce qu'**un système Java au niveau dudit serveur et desdits terminaux supporte le téléchargement desdits programmes d'applications.

7. Terminal d'un réseau, adapté
- pour interagir avec au moins un serveur dans le réseau, où le au moins un serveur stocke un ensemble de programmes d'applications, lesdits programmes d'applications mettant en ouvre des services utilisateur qui peuvent être souscrits par un utilisateur, ledit au moins un serveur stockant un profil de services pour chaque utilisateur, ledit profil de services définissant un sous-ensemble de l'ensemble de programmes d'applications servant à mettre en ouvre les services spécifiques souscrits par un utilisateur, suivant utilisateur, et
où le terminal est adapté, en outre
- pour demander, sur demande d'un utilisateur du terminal, le téléchargement du sous-ensemble de programmes d'applications, ledit sous-ensemble de programmes d'applications correspondant aux services auxquels l'utilisateur a souscrit et
- exécuter le sous-ensemble de programmes d'applications qui mettent en oeuvre les services souscrits par l'utilisateur sur le terminal après le téléchargement sur demande par l'utilisateur.

8. Terminal selon la revendication 7, **caractérisé en ce que** le terminal comprend
- un composant client demandant, sur demande d'un utilisateur, le téléchargement d'un logiciel d'application mettant en oeuvre des services utilisateur qui peuvent être souscrits par l'utilisateur,
- un composant d'exécution d'application exécutant ledit logiciel d'application sur demande directement sur le terminal, ledit composant d'exécution d'application n'étant porté qu'une seule fois sur le terminal.

9. Terminal tel que défini dans la revendication 8, **caractérisé en ce que** ledit composant d'exécution d'application est réalisé en tant que machine virtuelle.

10. Terminal tel que défini dans la revendication 8 ou 9, **caractérisé en ce que** la configuration de services spécifiques souscrits par un utilisateur peut s'effectuer par le biais dudit composant client.

11. Procédé pour réaliser des services dans un réseau, dans lequel
- la fourniture de services utilisateur est assurée par un serveur dans le noyau du réseau, ledit serveur stocke un ensemble de programmes d'applications qui mettent en oeuvre des services utilisateur qui peuvent être souscrits par un utilisateur,
- un profil de services est stocké sur le serveur pour chaque utilisateur, ledit profil de services définissant un sous-ensemble de l'ensemble de programmes d'applications qui mettent en oeuvre des services spécifiques souscrits par un utilisateur, suivant utilisateur,
- l'exécution dudit sous-ensemble de programmes d'applications correspondant aux services utilisateur souscrits par l'utilisateur est réalisée par des terminaux à la périphérie du réseau après que ledit sous-ensemble de programmes d'applications mettant en oeuvre les services utilisateur souscrits par l'utilisateur a été téléchargé dans le terminal.

12. Procédé selon la revendication 11, **caractérisé en ce que** le procédé est utilisé pour la réalisation de services supplémentaires pour la téléphonie Internet.

13. Réseau de communication, comprenant
- un réseau d'infrastructure fournissant des services utilisateur, où le réseau d'infrastructure comprend au moins un serveur stockant un ensemble de programmes d'applications, ledit ensemble de programmes d'applications mettant en oeuvre des services utilisateur qui peuvent être souscrits par un utilisateur, ledit au moins un serveur stockant un profil de services pour chaque utilisateur, ledit profil de services définissant un sous-ensemble de l'ensemble de programmes d'applications mettant en oeuvre les services spécifiques souscrits par un utilisateur, suivant utilisateur,
- des terminaux à la périphérie du réseau exécutant directement ledit sous-ensemble de programmes d'applications correspondant aux services utilisateur après que ledit sous-ensemble de programmes d'applications mettant en oeuvre les services utilisateur a été téléchargé dans lesdits terminaux.

14. Serveur dans un réseau comprenant :
un système de base de données stockant un ensemble de programmes d'applications mettant en oeuvre des services qui peuvent être souscrits par un utilisateur et ledit système de base de données stockant un profil de services pour chaque utilisateur, ledit profil de services définissant un sous-ensemble de l'ensemble de programmes d'applications mettant en oeuvre les services spécifiques souscrits par un utilisateur, suivant utilisateur,
un composant de transfert transférant, sur demande d'un utilisateur au niveau d'un terminal, le sous-ensemble de programmes d'applications correspondant aux services souscrits par l'utilisateur à ce terminal en vue de son exécution dans le terminal.

15. Serveur tel que défini dans la revendication 14, **caractérisé en ce que** lesdits services sont des services supplémentaires de services utilisateur basiques.

16. Serveur tel que défini dans la revendication 14, **caractérisé en ce que** lesdits services sont des services supplémentaires de la téléphonie Internet.
